# EUROPEAN PATENT APPLICATION

(11) **EP 4 427 915 A1**
(43) Date of publication of application: **11.09.2024**
(21) Application number: 24161979.0
(22) Date of filing: 07.03.2024
(51) Int. Cl.: B29C 70/00, B29D 99/00, B29C 70/46, B32B 27/12, B29K 101/12, B29K 105/00

(54) **FIRE RETARDANT THERMOPLASTIC COMPOSITE AND METHOD FOR FORMING SAME**

(30) Priority: 07.03.2023 IN 202311015223
(71) Applicant: Rohr, Inc., Chula Vista, California 91910 (US)
(72) Inventor: G, Ajeesh, Bangalore (IN); Manchoor, Hemesh, Bangalore (IN)
(74) Representative: Dehns

(57) **Abstract**

A method for forming a fire-retardant thermoplastic composite panel includes mixing a thermoplastic polymer with a fire-retardant additive to form a fire-retardant polymer composition and assembling a composite layup of a plurality of first layers and a plurality of second layers by alternatingly positioning the plurality of first layers and the plurality of second layers with each first layer including a fire-retardant polymer composition film of the fire-retardant polymer composition and each second layer including a carbon-fiber fabric. The method further includes compression molding the composite layup to form the fire-retardant thermoplastic composite panel.

## Description

### BACKGROUND

### 1. Technical Field

This disclosure relates generally to fire-retardant aircraft structures and, more particularly, to methods for forming fire-retardant thermoplastic composites for aircraft propulsion system nacelle structures.

### 2. Background Information

An aircraft propulsion system may include a nacelle forming an exterior housing of the propulsion system. To facilitate propulsion system safety, portions of the nacelle may be designed to contain or otherwise resist fires. For example, portions of the nacelle may be formed by fire-retardant materials. While known fire-retardant materials and known methods for manufacturing these fire-retardant materials may have various advantages, there is still room in the art for improvement. There is a need in the art therefore for improved fire-retardant materials and methods for making these fire-retardant materials.

### SUMMARY

It should be understood that any or all of the features or embodiments described herein can be used or combined in any combination with each and every other feature or embodiment described herein unless expressly noted otherwise.

According to an aspect of the present disclosure, a method for forming a fire-retardant thermoplastic composite panel (e.g. a panel as described herein) includes mixing a thermoplastic polymer with a fire-retardant additive to form a fire-retardant polymer composition. The fire-retardant additive includes one or both of borax and red phosphorus. The method further includes assembling a composite layup of a plurality of first layers and a plurality of second layers by alternatingly positioning the plurality of first layers and the plurality of second layers with each first layer including a fire-retardant polymer composition film of the fire-retardant polymer composition and each second layer including a carbon-fiber fabric. The method further includes compression molding the composite layup to form the fire-retardant thermoplastic composite panel.

In any of the aspects or embodiments described above and herein, the thermoplastic polymer may include polyether ether ketone (PEEK).

In any of the aspects or embodiments described above and herein, the fire-retardant additive may be five to eight percent (5-8%) of the fire-retardant polymer composition by weight.

In any of the aspects or embodiments described above and herein, compression molding the composite layup may include exposing the composite layup to a consolidation temperature in a range of 380 °C to 420 °C.

In any of the aspects or embodiments described above and herein, compression molding the composite layup may include applying a consolidation pressure to the composite layup, the consolidation pressure less than twelve (12) bar.

In any of the aspects or embodiments described above and herein, the consolidation pressure may be less than seven (7) bar.

In any of the aspects or embodiments described above and herein, the method may further include applying a plasma cleaning process to the carbon-fiber fabric prior to assembling the composite layup of the plurality of first layers and the plurality of second layers.

In any of the aspects or embodiments described above and herein, the method may further include extruding the fire-retardant polymer composition to form the fire-retardant polymer composition film.

According to another aspect of the present disclosure, a fire-retardant thermoplastic composite panel (e.g. a panel formed according to a method as herein described) includes a plurality of first layers and a plurality of second layers alternatingly disposed through a thickness of the fire-retardant thermoplastic composite panel. Each first layer including a fire-retardant polymer composition including a thermoplastic polymer and borax. Each second layer including a carbon-fiber fabric.

In any of the aspects or embodiments described above and herein, borax may be five to eight percent (5-8%) of the fire-retardant polymer composition by weight.

In any of the aspects or embodiments described above and herein, the carbon-fiber fabric may include a plurality of continuous carbon fibers.

In any of the aspects or embodiments described above and herein, the plurality of first layers and the plurality of second layers may form a panel body. The panel body may include a first panel side and a second panel side. The thickness may extend between and to the first panel side and the second panel side.

In any of the aspects or embodiments described above and herein, each of the first panel side and the second panel side may be formed by a respective first layer of the plurality of first layers.

In any of the aspects or embodiments described above and herein, the thermoplastic polymer may include polyether ether ketone (PEEK).

According to another aspect of the present disclosure, a method for forming a fire-retardant thermoplastic composite panel (e.g. a panel as described herein) includes mixing a thermoplastic polymer with a fire-retardant additive to form a fire-retardant polymer composition, applying a plasma cleaning process to a carbon-fiber fabric, and assembling a composite layup of a plurality of first layers and a plurality of second layers by alternatingly positioning the plurality of first layers and the plurality of second layers with each first layer including a fire-retardant polymer composition film of the fire-retardant polymer composition and each second layer including the carbon-fiber fabric. The method further includes compression molding the composite layup to form the fire-retardant thermoplastic composite panel.

In any of the aspects or embodiments described above and herein, compression molding the composite layup may include applying a consolidation pressure to the composite layup, the consolidation pressure less than twelve (12) bar.

In any of the aspects or embodiments described above and herein, the consolidation pressure may be less than seven (7) bar.

In any of the aspects or embodiments described above and herein, the carbon-fiber fabric may include a plurality of continuous carbon fibers.

In any of the aspects or embodiments described above and herein, borax may be five to eight percent (5-8%) of the fire-retardant polymer composition by weight.

In any of the aspects or embodiments described above and herein, compression molding the composite layup may include exposing the composite layup to a consolidation temperature in a range of 380 °C to 420 °C.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a perspective view of an aircraft including propulsion systems, in accordance with one or more embodiments of the present disclosure.
FIG. 2 illustrates a side view of an aircraft propulsion system, in accordance with one or more embodiments of the present disclosure.
FIGS. 3 illustrates a cutaway, side view of an aircraft propulsion system, in accordance with one or more embodiments of the present disclosure.
FIG. 4 illustrates a block diagram depicting a method for forming a fire-retardant thermoplastic composite, in accordance with one or more embodiments of the present disclosure.
FIG. 5 diagrammatically illustrates a sequence for forming a thermoplastic composite panel from a composite layup and includes an exploded view of the composite layup, in accordance with one or more embodiments of the present disclosure.
FIG. 6 illustrates a schematic view of an exemplary plasma generator, in accordance with one or more embodiments of the present disclosure.
FIG. 7 illustrates a schematic view of an exemplary compression molding assembly, in accordance with one or more embodiments of the present disclosure.

### DETAILED DESCRIPTION

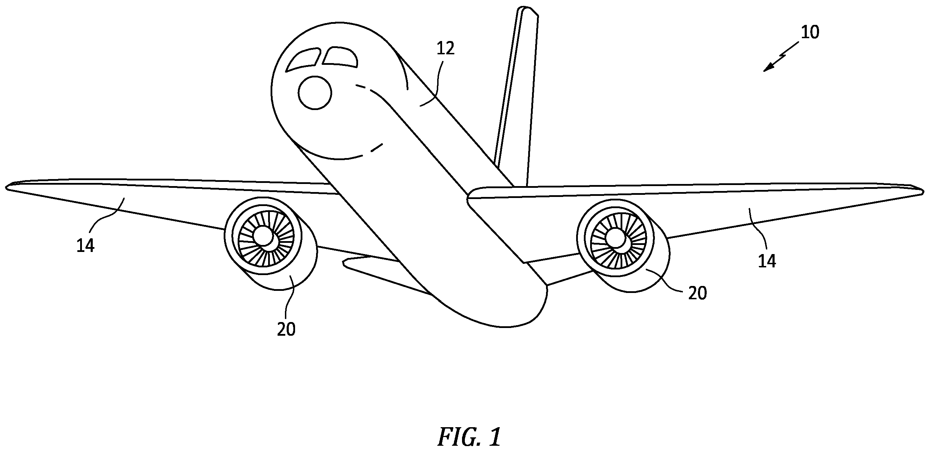

FIG. 1 illustrates an aircraft 10 including propulsion systems 20. The aircraft 10 of FIG. 1 generally includes a fuselage 12 and wings 14 extending outward from the fuselage 12. Each of the propulsion systems 20 of FIG. 1 are mounted to and below a respective wing 14. The present disclosure, however, is not limited to any particular mounting configuration or quantity for the propulsion systems 20.

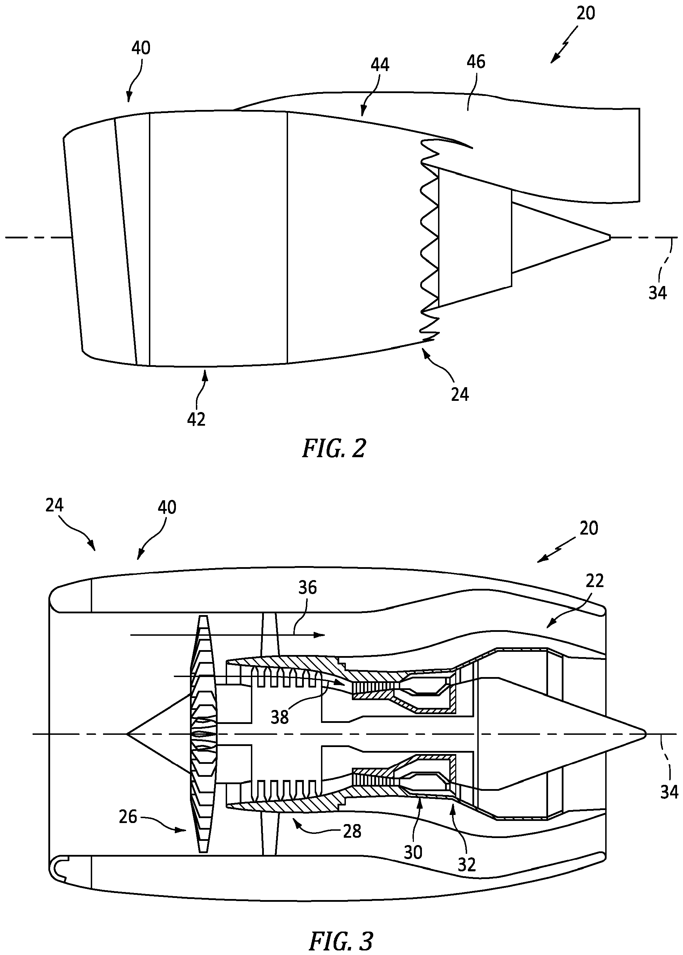

FIGS. 2 and 3 illustrate an exemplary configuration of the propulsion system 20. FIG. 2 illustrates a side, exterior view of the propulsion system 20. FIG. 3 illustrates a side, cutaway view of the propulsion system 20. The propulsion system 20 of FIGS. 2 and 3 includes a gas turbine engine 22 and a nacelle 24. The gas turbine engine 22 of FIGS. 2 and 3 is configured as a multi-spool, turbofan gas turbine engine. However, it should be understood that aspects of the present disclosure may be equally applicable to other configurations of gas turbine engines such as, but not limited to, a turboshaft gas turbine engine, a turboprop gas turbine engine, a turbojet gas turbine engine, a propfan gas turbine engine, an open rotor gas turbine engine, or the like. Aspects of the present disclosure may also be equally applicable to other types of aircraft propulsion systems which do not include gas turbine engines such as, but not limited to, an electric-fan propulsion system, an electric-prop propulsion system, or the like.

The gas turbine engine 22 of FIG. 2 and FIG. 3 includes a fan section 26, a compressor section 28 (e.g., including one or more bladed compressor rotors), a combustor section 30, and a turbine section 32 (e.g., including one or more bladed turbine rotors) extending sequentially along an axial centerline 34 of the propulsion system 20. The fan section 26 drives air along a bypass flow path 36 while the compressor section 28 drives air along a core flow path 38 for compression and communication into the combustor section 30 where the air is mixed with fuel and burned. Combustion gas from the combustor section 30 is directed through the turbine section 32. The turbine section 32 drives rotation of components of the fan section 26 and the compressor section 28 in response the combustion gas flow through the turbine section 32.

The nacelle 24 of FIGS. 2 and 3 is configured to house and provide an aerodynamic cover for the propulsion system 20. The nacelle 24 extends axially along the axial centerline 34. The nacelle 24 extends circumferentially about (e.g., completely around) the axial centerline 34 to surround the gas turbine engine 22 and form the bypass flow path 36.

The nacelle 24 of FIGS. 2 and 3 includes an air inlet section 40, a fan cowl section 42, a thrust reverser section 44, a pylon 46. The air inlet section 40, the fan cowl section 42, and the thrust reverser section 44 extend circumferentially about (e.g., completely around) the axial centerline 34. The air inlet section 40 forms an upstream (e.g., axially forward) end of the nacelle 24. The air inlet section 40 may be formed by or otherwise include one or more structural components such as, but not limited to, outer barrel panels, inner barrel panels, lip skin panels, bulkheads (e.g., a forward bulkhead and/or an aft bulkhead), and the like. The fan cowl section 42 may include one or more pivotable doors (e.g., cowl doors) configured to facilitate access to internal components of the propulsion system 20 and its gas turbine engine 22. The thrust reverser section 44 may form a downstream (e.g., axially aft) end of the nacelle 24. The thrust reverser section 44 may include one or more axially translatable or pivotable portions configured to facilitate deceleration of the aircraft 10 (see FIG. 1), for example, by directing combustion exhaust gas from the gas turbine engine 22 in an upstream (e.g., axially forward) direction. The pylon 46 is configured for mounting the propulsion system 20 to one of the wings 14 or another portion of the aircraft 10 (see FIG. 1).

Aircraft propulsion system nacelle materials, such as those for the nacelle 24, may be selected to provide suitable structural strength, rigidity, and impact resistance for the nacelle while also minimizing the nacelle weight. Thermoset composite materials have been used for portions of propulsion system nacelles due, at least in part, to their mechanical strength, weight (e.g., relatively high strength-to-weight ratio), electrical insulating properties, polymer wettability properties, and relative ease of manufacturing nacelle structures (e.g., panels) with the thermoset composite materials. However, we have recognized that thermoset composite materials provide relatively low fire resistivity and, therefore, may not be preferred for at least some portions of propulsion system nacelles and/or for certain propulsion system configurations. A particular fire resistivity concern is for portions of propulsion system nacelles which may be exposed to fire growth and flashover conditions for which localized temperatures may exceed 350 °C. In some propulsion system nacelle configurations of which we are aware, metallic (e.g., aluminum) nacelle structures have been selected to facilitate suitable nacelle fire resistivity at the expense of additional weight and manufacturing cost and complexity for the nacelle.

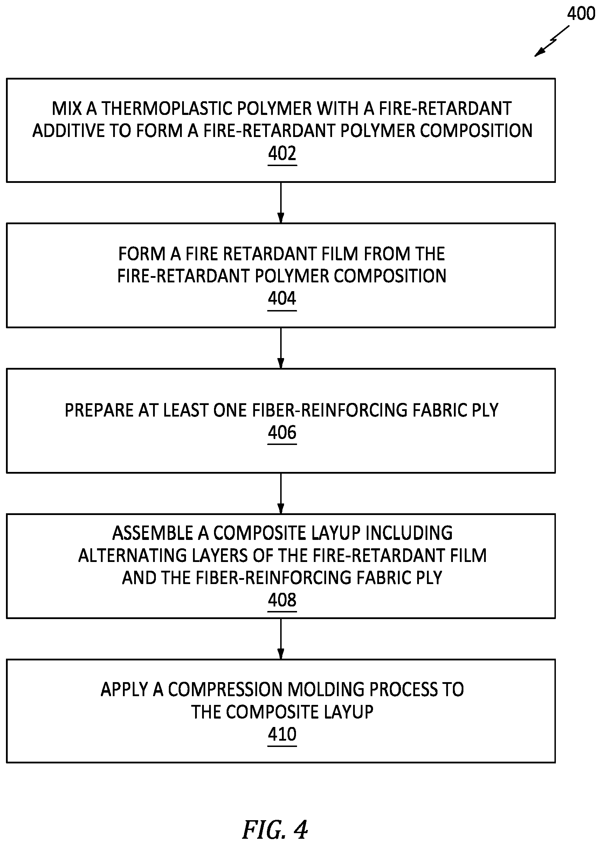

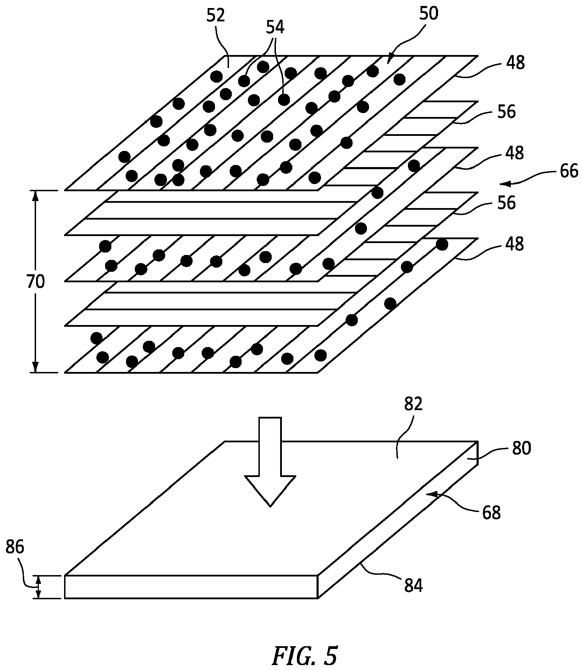

Referring to FIGS. 4 and 5, a Method 400 for forming a fire-retardant thermoplastic composite (e.g., a thermoplastic composite panel) is provided. FIG. 4 illustrates a flowchart for the Method 400. Unless otherwise noted herein, it should be understood that the steps of Method 400 are not required to be performed in the specific sequence in which they are discussed below and, in some embodiments, the steps of Method 400 may be performed separately or simultaneously.

Step 402 includes mixing a thermoplastic polymer with a fire-retardant additive to form a fire-retardant polymer composition. For example, a resin (e.g., a molten resin) of the thermoplastic polymer may be uniformly mixed with the fire-retardant additive to form the fire-retardant polymer composition. The thermoplastic polymer and the fire-retardant additive may be mixed together in a compounding apparatus such as, but not limited to, a combination twinscrew mixer and extruder, as is known in the art. The present disclosure, however, is not limited to any particular mixing device for mixing the thermoplastic polymer and the fire-retardant additive.

The thermoplastic polymer includes one or more thermoplastic polymer materials. For example, the thermoplastic polymer may include polyether ether ketone (PEEK). PEEK has a high melting point (343 °C) and optimal processing characteristics, making PEEK particularly useful for forming fire-retardant thermoplastic composites in accordance with the present disclosure. However, the thermoplastic polymer may additionally or alternatively include one or more other thermoplastic polymer materials such as, but not limited to, polyether ketone ketone (PEKK), polyphenylene sulfide (PPS), polypropylene (PP), polyethylene (PE), polyvinylchloride (PVC), polystyrene (PS), polyethylene terephthalate (PET), polycarbonate (PC), and polyetherimide (PEI).

The fire-retardant additive may include sodium borate decahydrate (commonly referred to with the chemical formula Na₂B₄O₇·10H₂O; hereinafter "borax"). However, the present disclosure is not limited to the use of borax for the fire-retardant additive and the fire-retardant additive may additionally or alternatively include one or more other fire-retardant additives such as, but not limited to, magnesium hydroxide, ammonia-based fire-retardant additives, and phosphorus-based fire-retardant additives (e.g., red phosphorus). In one example, the fire-retardant polymer composition may include five to eight percent (5-8%) of the fire-retardant additive, by weight. Greater compositions of the fire-retardant additive in the fire-retardant polymer composition may improve fire retardance characteristics of the resultant fire-retardant thermoplastic composite, however, higher compositions of the fire-retardant additive (e.g., compositions greater than approximately eight percent (8%) by weight) may negatively impact the processability (e.g., extrusion) characteristics of the fire-retardant polymer composition.

Step 404 includes extruding the fire-retardant polymer composition to form at least one fire-retardant polymer film 48. FIG. 5 diagrammatically illustrates a plurality of the fire-retardant polymer film 48 (e.g., a plurality of layers of the fire-retardant polymer film 48). The present disclosure, however, is not limited to any particular quantity for the fire-retardant polymer film 48. The fire-retardant polymer film 48 of FIG. 5 includes the mixed fire-retardant polymer composition 50 of the thermoplastic polymer 52 and the fire-retardant additive 54. The at least one fire-retardant polymer film 48 may be formed by extruding the mixed fire-retardant polymer composition using the exemplary compounding apparatus previously discussed. Alternatively, the at least one fire-retardant polymer film 48 may be formed by heating and extruding polymeric material chips, pellets, etc. including the fire-retardant polymer composition. The present disclosure, however, is not limited to any particular extrusion device for forming the at least one fire-retardant polymer film 48.

Step 406 includes selecting or otherwise preparing at least one fiber-reinforcing fabric ply 56. FIG. 5 diagrammatically illustrates a plurality of the fiber-reinforcing fabric ply 56. The present disclosure, however, is not limited to any particular quantity for the fiber-reinforcing fabric ply 56. Each fiber-reinforcing fabric ply 56 includes a plurality of reinforcing fibers. The reinforcing fibers may be carbon fibers, glass fibers, aramid or para-aramid synthetic fibers, or the like which may be facilitate suitable structural strength and high-temperature resistance for a fire-retardant thermoplastic composite. The reinforcing fibers for each fiber-reinforcing fabric ply 56 may be configured as continuous fibers. Continuous fibers generally include very high fiber length-to-diameter ratios, for example, relative to discontinuous fibers. The continuous reinforcing fibers are assembled together to form a reinforcing-fiber fabric. The reinforcing fiber fabric may be a woven fabric including continuous fibers having a multi-directional orientation (e.g., unidirectional fibers assembled together to form a multi-directional reinforcing-fiber fabric), thereby facilitating composite stiffness in multiple directions. Each fiber-reinforcing fabric ply 56 may include a single layer of fibers forming the fiber-reinforcing fabric or a plurality of layers of fibers assembled together (e.g., woven) to form the fiber-reinforcing fabric.

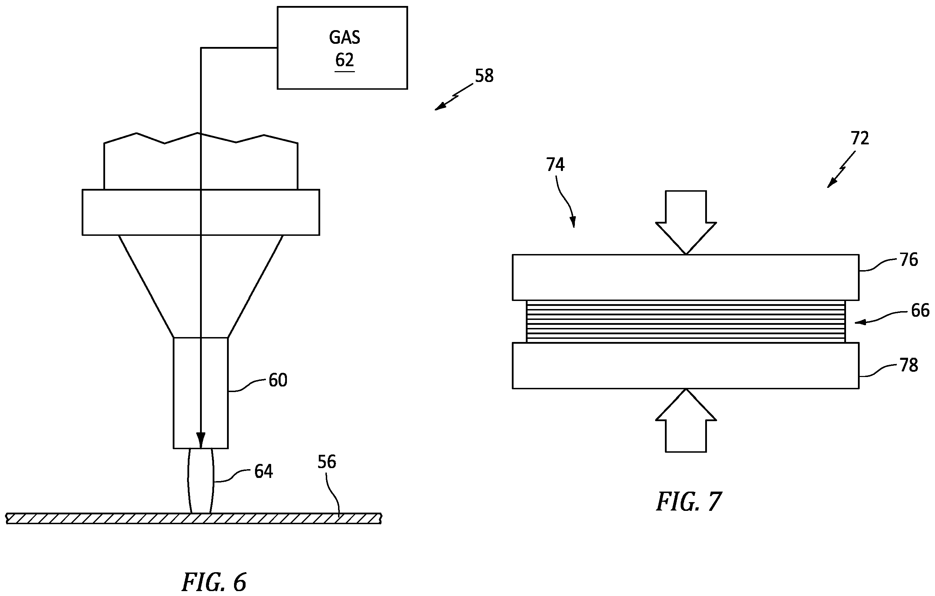

Step 406 may include applying a surface modification treatment to each of the fiber-reinforcing layers 56 to improve adhesion between the fiber-reinforcing fabric ply 56 and the fire-retardant polymer film 48. For example, FIG. 6 illustrates application of a plasma treatment to the fiber-reinforcing fabric ply 56 using an exemplary configuration of a plasma generator 58. The plasma generator 58 of FIG. 6 includes a plasma nozzle 60. The plasma generator 58 is configured to generate a plasma (e.g., from a stored working gas 62 such as compressed air, hydrogen, nitrogen, oxygen, or the like) and direct a plasma stream 64 (e.g., a plasma jet) onto the fiber-reinforcing fabric ply 56 with the plasma nozzle 60. The plasma generator 58 may be configured to generate an atmospheric-pressure plasma. As used herein, the term "atmospheric-pressure plasma" refers to a plasma having a pressure which is approximately the same as the pressure of the surrounding atmosphere and can be contrasted with "low-pressure" or "highpressure" plasmas which may require the use of a pressure vessel (e.g., a reaction vessel) to maintain the plasma pressure above that of the surrounding atmosphere. Atmospheric-pressure plasmas may be generated by various plasma generator configurations such as, but not limited to, an arc discharge configuration or a corona discharge configuration, and the present disclosure is not limited to any particular plasma generator 58 configuration. Application of the plasma treatment to the fiber-reinforcing fabric ply 56 may remove contaminants from surfaces of the fiber-reinforcing fabric ply 56, which contaminants might otherwise interfere with adhesion between the fiber-reinforcing fabric ply 56 and the fire-retardant polymer film 48. Application of the plasma treatment to the fiber-reinforcing fabric ply 56 (e.g., chemical and physical interaction of the plasma stream 64 with the fiber-reinforcing fabric ply 56) may increase the surface energy of the fiber-reinforcing fabric ply 56, thereby improving wettability of the fiber-reinforcing fabric ply 56 with respect to the thermoplastic polymer 52 of the fire-retardant polymer film 48. Surface energy of the plasma-treated fiber-reinforcing fabric ply 56 may be indirectly measured, for example, by determining a static contact angle ϑ (hereinafter "contact angle ϑ*"*) of the plasma-treated fiber-reinforcing fabric ply 56 with respect to the thermoplastic polymer 52 of the fire-retardant polymer film 48. The contact angle ϑ may be understood as the angle at which the liquid interface for the thermoplastic polymer 52 intersects the solid surface of the plasma-treated fiber-reinforcing fabric ply 56. As an example, a suitable contact angle ϑ for the plasma-treated fiber-reinforcing fabric ply 56 may be less than or equal to twenty degrees (20°). However, the present disclosure is not limited to any particular contact angle ϑ for the plasma-treated fiber-reinforcing fabric ply 56.

Step 408 includes assembling a composite layup 66 of a plurality of layers formed by the fire-retardant polymer film 48 and the fiber-reinforcing fabric ply 56. The composite layup 66 is formed by alternatingly positioning layers of the fire-retardant polymer film 48 and the fiber-reinforcing fabric ply 56. As an example, the composite layup 66 of FIG. 5 includes, in order from top to bottom, a first layer of the fire-retardant polymer film 48, a first layer of the fiber-reinforcing fabric ply 56, a second layer of the fire-retardant polymer film 48, a second layer of the fiber-reinforcing fabric ply 56, and a third layer of the fire-retardant polymer film 48. The composite layup 66 of the present disclosure, however, is not limited to any particular quantity of alternating fire-retardant polymer film 48 and fiber-reinforcing fabric ply 56 layers. As shown in FIG. 5, the outer layers of the composite layup 66 may be formed by layers of the fire-retardant polymer film 48 to facilitate greater quantities of the fire-retardant additive 54 at (e.g., on, adjacent, or proximate) surfaces of the resultant thermoplastic composite material formed from the composite layup 66.

Step 410 includes applying a compression molding process (e.g., a consolidation process) to the composite layup 66 to form a thermoplastic composite panel 68 or other thermoplastic composite material. The compression molding process includes the application of heat and pressure to the composite layup 66 until the composite layup 66 is cured forming the thermoplastic composite panel 68. For example, consolidation pressure may be applied to the composite layup 66 in a direction of a thickness 70 of the composite layup 66, to consolidate the fire-retardant polymer film 48 layers with the fiber-reinforcing fabric ply 56 layers. Compression molding of the composite layup 66 may be performed using a compression molding assembly. For example, FIG. 7 illustrates a compression molding process for the composite layup 66 using an exemplary configuration of a compression molding assembly 72. The compression molding assembly 72 of FIG. 7 includes a mold 74. The mold 74 includes an upper tooling plate 76 and a lower tooling plate 78. One or both of the upper tooling plate 76 and the lower tooling plate 78 may be configured as a heated plate to provide heat for consolidation of the composite layup 66. With the composite layup 66 positioned between the upper tooling plate 76 and the lower tooling plate 78, the mold 74 operates (e.g., hydraulically operates) one or both of the upper tooling plate 76 and the lower tooling plate 78 to compress and consolidate the composite layup 66. Of course, the present disclosure is not limited to the particular configuration of the compression molding assembly 72 of FIG. 7, and compression molding of the composite layup 66 may be performed using any suitable compression molding assembly conventionally known in the art.

Application of heat and pressure for the compression molding process may include exposing the composite layup 66 to a consolidation temperature of approximately 400 °C. For example, the compression molding process may include exposing the composite layup 66 to a consolidation temperature in the range of 380 °C to 420 °C using the compression molding assembly 72. Decomposition of borax or red phosphorus in the least one fire-retardant polymer film 48 of the composite layup 66 may be relatively minimal within the 380 °C to 420 °C temperature range. Other fire-retardant additives, such as magnesium hydroxide, may experience significant decomposition losses within the 380 °C to 420 °C temperature range. These other fire-retardant additives may be used for the at least one fire-retardant polymer film 48 in combination with one or more thermoplastic polymers having relatively lower melting points (e.g., compared to high-melting-point thermoplastic polymers such as PEEK), and may undergo compression molding at a lower consolidation temperature to reduce decomposition of the fire-retardant additives. Application of heat and pressure for the compression molding process may additionally or alternatively include applying a compression pressure to the composite layup 66 of less than 12 bar, and preferably less than 7 bar, during the compression molding process. In other words, the pressure applied to the composite layup 66 during the compression molding process (e.g., the entire compression molding process) may be controlled using the compression molding assembly 72 so as not to exceed 12 bar, and preferably less than 7 bar. We have found that limiting the consolidation pressure, as previously discussed, may prevent or reduce the likelihood of fiber pull out (e.g., fibers pulled off or pushed away from) the fiber-reinforcing fabric ply 56 layers during the compression molding process of the composite layup 66.

The thermoplastic composite panel 68 includes a panel body 80 formed by the consolidated, alternating layers of the fire-retardant polymer film 48 layers and the fiber-reinforcing fabric ply 56 layers. The panel body 80 extends between and to a first panel side 82 of the panel body 80 and a second panel side 84 of the panel body 80. The panel body 80 has a thickness 86 extending between and to the first panel side 82 and the second panel side 84.

The thermoplastic composite panel 68 of the present disclosure includes the fire-retardant additive(s) of the fire-retardant polymer film 48 layers distributed through the thickness 86 of the thermoplastic composite panel 68. Accordingly, the thermoplastic composite panel 68 provides through-the-thickness fire resistivity improving safety for aerospace structures such as the nacelle 24 (see FIGS. 2-3). The fire-retardant additive(s) of the thermoplastic composite panel 68 may exhibit endothermic decomposition when exposed to elevated temperatures resulting from a nearby fire. This endothermic decomposition may have the affect of cooling the thermoplastic composite panel 68 to temperatures which are less than combustible temperature levels for the thermoplastic composite panel 68. Moreover, decomposition of the fire-retardant additive(s) may yield water and noncombustible gases which may dilute flammable gas concentrations in proximity to the thermoplastic composite panel 68. The fire-retardant additive(s) may additionally form a protective layer on surfaces of the thermoplastic composite panel 68 which are exposed to fire or elevated temperatures. Decomposition of some fire-retardant additives, such as those described in the present disclosure, may produce a "char" layer on the thermoplastic composite panel 68. The char layer is a porous, solid layer which may protect the underlying composite material of the thermoplastic composite panel 68 from further decomposition as well as provide thermal insulation, resistance to combustion, and structural stability to the thermoplastic composite panel 68. As an example, the borax fire-retardant additive of the thermoplastic composite panel 68 may experience a series of decomposition chemical reactions consistent with the following Equation [1]:

**Na₂B₄O₇·10H₂O → Na₂B₄O₇ + 10H₂O → 2NaBO₂ + B₂O₃** **[1]**

As shown in Equation [1], the decomposition of the borax fire-retardant additive may yield boric oxide (B₂O₃). This boric oxide may, in turn, react with water to form boric acid, which boric acid may further function as an insulating layer of the thermoplastic composite panel 68 and functioning as a fire retardant and smolder suppressant.

The present disclosure provides for the manufacture of thermoplastic composites (e.g., the thermoplastic composite panel 68) which may provide improved fire retardance and resistance while also exhibiting structural strength and lightweight characteristics which are suitable for aerospace structures. Moreover, processes of the present disclosure for forming thermoplastic composites provide improved manufacturing speed and cost, for example, in comparison to processes for forming conventional thermosetting composites for aerospace structures. While aspects of the present disclosure are explained with respect to thermoplastic composite panels, it should be understood that aspects of the present disclosure are applicable to other thermoplastic composite components as well. For example, aspects of the present disclosure are also relevant to forming composite sandwich structures (e.g., acoustic panels or other components having a core sandwiched between composite skins).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.
Certain embodiments of the present disclosure include:
1. A method for forming a fire-retardant thermoplastic composite panel, the method comprising:
   mixing a thermoplastic polymer with a fire-retardant additive to form a fire-retardant polymer composition, the fire-retardant additive including one or both of borax and red phosphorus;
   assembling a composite layup of a plurality of first layers and a plurality of second layers by alternatingly positioning the plurality of first layers and the plurality of second layers with:
      each first layer including a fire-retardant polymer composition film of the fire-retardant polymer composition; and
      each second layer including a carbon-fiber fabric; and
   compression molding the composite layup to form the fire-retardant thermoplastic composite panel.
2. The method of embodiment 1, wherein the thermoplastic polymer includes polyether ether ketone (PEEK).
3. The method of embodiment 1, wherein the fire-retardant additive is five to eight percent (5-8%) of the fire-retardant polymer composition by weight.
4. The method of embodiment 1, wherein compression molding the composite layup includes exposing the composite layup to a consolidation temperature in a range of 380 °C to 420 °C.
5. The method of embodiment 1, wherein compression molding the composite layup includes applying a consolidation pressure to the composite layup, the consolidation pressure less than twelve (12) bar.
6. The method of embodiment 5, wherein the consolidation pressure less than seven (7) bar.
7. The method of embodiment 1, further comprising applying a plasma cleaning process to the carbon-fiber fabric prior to assembling the composite layup of the plurality of first layers and the plurality of second layers.
8. The method of embodiment 1, further comprising extruding the fire-retardant polymer composition to form the fire-retardant polymer composition film.
9. A fire-retardant thermoplastic composite panel comprising:
   a plurality of first layers and a plurality of second layers alternatingly disposed through a thickness of the fire-retardant thermoplastic composite panel,
   each first layer including a fire-retardant polymer composition including a thermoplastic polymer and borax, and
   each second layer including a carbon-fiber fabric.
10. The fire-retardant thermoplastic composite panel of embodiment 9, wherein borax is five to eight percent (5-8%) of the fire-retardant polymer composition by weight.
11. The fire-retardant thermoplastic composite panel of embodiment 9, wherein the carbon-fiber fabric includes a plurality of continuous carbon fibers.
12. The fire-retardant thermoplastic composite panel of embodiment 9, wherein the plurality of first layers and the plurality of second layers forms a panel body, the panel body including a first panel side and a second panel side, the thickness extending between and to the first panel side and the second panel side.
13. The fire-retardant thermoplastic composite panel of embodiment 12, wherein each of the first panel side and the second panel side is formed by a respective first layer of the plurality of first layers.
14. The fire-retardant thermoplastic composite panel of embodiment 9, wherein the thermoplastic polymer includes polyether ether ketone (PEEK).
15. A method for forming a fire-retardant thermoplastic composite panel, the method comprising:
   mixing a thermoplastic polymer with a fire-retardant additive to form a fire-retardant polymer composition;
   applying a plasma cleaning process to a carbon-fiber fabric;
   assembling a composite layup of a plurality of first layers and a plurality of second layers by alternatingly positioning the plurality of first layers and the plurality of second layers with:
      each first layer including a fire-retardant polymer composition film of the fire-retardant polymer composition; and
      each second layer including the carbon-fiber fabric; and
   compression molding the composite layup to form the fire-retardant thermoplastic composite panel.
16. The method of embodiment 15, wherein compression molding the composite layup includes applying a consolidation pressure to the composite layup, the consolidation pressure less than twelve (12) bar.
17. The method of embodiment 16, wherein the consolidation pressure less than seven (7) bar.
18. The method of embodiment 15, wherein the carbon-fiber fabric includes a plurality of continuous carbon fibers.
19. The method of embodiment 15, wherein borax is five to eight percent (5-8%) of the fire-retardant polymer composition by weight.
20. The method of embodiment 15, wherein compression molding the composite layup includes exposing the composite layup to a consolidation temperature in a range of 380 °C to 420 °C.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A method for forming a fire-retardant thermoplastic composite panel, the method comprising:
mixing a thermoplastic polymer with a fire-retardant additive to form a fire-retardant polymer composition, the fire-retardant additive including one or both of borax and red phosphorus;
assembling a composite layup of a plurality of first layers and a plurality of second layers by alternatingly positioning the plurality of first layers and the plurality of second layers with:
each first layer including a fire-retardant polymer composition film of the fire-retardant polymer composition; and
each second layer including a carbon-fiber fabric; and
compression molding the composite layup to form the fire-retardant thermoplastic composite panel.

2. The method of claim 1, further comprising applying a plasma cleaning process to the carbon-fiber fabric prior to assembling the composite layup of the plurality of first layers and the plurality of second layers.

3. A method for forming a fire-retardant thermoplastic composite panel, the method comprising:
mixing a thermoplastic polymer with a fire-retardant additive to form a fire-retardant polymer composition;
applying a plasma cleaning process to a carbon-fiber fabric;
assembling a composite layup of a plurality of first layers and a plurality of second layers by alternatingly positioning the plurality of first layers and the plurality of second layers with:
each first layer including a fire-retardant polymer composition film of the fire-retardant polymer composition; and
each second layer including the carbon-fiber fabric; and
compression molding the composite layup to form the fire-retardant thermoplastic composite panel.

4. The method of any preceding claim, wherein the thermoplastic polymer includes polyether ether ketone (PEEK).

5. The method of any preceding claim, wherein the fire-retardant additive is five to eight percent (5-8%) of the fire-retardant polymer composition by weight, optionally wherein the fire-retardant additive is borax.

6. The method of any preceding claim, wherein compression molding the composite layup includes exposing the composite layup to a consolidation temperature in a range of 380 °C to 420 °C.

7. The method of any preceding claim, wherein compression molding the composite layup includes applying a consolidation pressure to the composite layup, wherein the consolidation pressure is less than twelve (12) bar, optionally wherein the consolidation pressure is less than seven (7) bar.

8. The method of any preceding claim, further comprising extruding the fire-retardant polymer composition to form the fire-retardant polymer composition film.

9. The method of any preceding claim, wherein the carbon-fiber fabric includes a plurality of continuous carbon fibers.

10. A fire-retardant thermoplastic composite panel comprising:
a plurality of first layers and a plurality of second layers alternatingly disposed through a thickness of the fire-retardant thermoplastic composite panel,
each first layer including a fire-retardant polymer composition including a thermoplastic polymer and borax, and
each second layer including a carbon-fiber fabric.

11. The fire-retardant thermoplastic composite panel of claim 10, wherein borax is five to eight percent (5-8%) of the fire-retardant polymer composition by weight.

12. The fire-retardant thermoplastic composite panel of claim 10 or claim 11, wherein the carbon-fiber fabric includes a plurality of continuous carbon fibers.

13. The fire-retardant thermoplastic composite panel of any one of claims 10-12, wherein the plurality of first layers and the plurality of second layers forms a panel body, the panel body including a first panel side and a second panel side, the thickness extending between and to the first panel side and the second panel side.

14. The fire-retardant thermoplastic composite panel of claim 13, wherein each of the first panel side and the second panel side is formed by a respective first layer of the plurality of first layers.

15. The fire-retardant thermoplastic composite panel of any one of claims 10-14, wherein the thermoplastic polymer includes polyether ether ketone (PEEK).
